# EUROPEAN PATENT SPECIFICATION

(11) **EP 3 920 724 B1**
(45) Date of publication and mention of the grant of the patent: **15.03.2023**
(21) Application number: 20700916.8
(22) Date of filing: 20.01.2020
(51) Int. Cl.: A23N 12/08, A23N 12/10, A23N 12/12

(54) **APPARATUS FOR ROASTING COFFEE BEANS**
VORRICHTUNG ZUM RÖSTEN VON KAFFEEBOHNEN
APPAREIL DE TORRÉFACTION DE GRAINS DE CAFÉ

(30) Priority: 04.02.2019 EP 19155208
(43) Date of publication of application: 15.12.2021
(73) Proprietor: Société des Produits Nestlé S.A., 1800 Vevey (CH)
(72) Inventor: CECCAROLI, Stefano, 1373 Chavornay (CH); JACCARD, Sandrine, 1450 Ste-Croix (CH); GUREVITCH-BEACOCK, Paul, Lichfield Staffordshire WS13 6AT (GB); BRIGANTE, Stuart, Haden Cross West Midlands B64 7JD (GB); DUBIEF, Flavien, 1424 Champagne (CH)
(74) Representative: Ducreux, Marie
(86) International application number: PCT/EP2020/051311
(87) International publication number: WO 2020/160895

(56) References cited:
- US-A- 4 484 064
- US-A- 5 564 331
- US-A1- 2003 061 942
- US-A1- 2010 051 602
- US-B1- 6 173 506

## Description

### Field of the invention

The present invention relates to apparatus for roasting coffee beans with heated air and particularly suited for use in the home or in shops and cafes.

### Background of the invention

Roasting of coffee beans at small scale that is at home or in shops and cafes is usually implemented with small sized apparatuses wherein coffee beans are agitated inside hot air. One type of apparatus uses a rotating perforated drum wherein coffee beans are introduced and tumbled while heat is supplied.

Another type of apparatus uses fluidized bed technology implementing a hot air fluid bed chamber. Within such a chamber, heated air is forced through a screen or a perforated plate under the coffee beans with sufficient force to lift the beans. Heat is transferred to the beans as they tumble and circulate within this fluidized bed.

Derived from an industrial roaster described in US 3964175, this technology has been adapted in small domestic devices like US4484064, US4494314, US4631838, US5269072, US5564331.

Most of the roasters implementing fluidized bed technology present the same configuration of the key elements that are the roasting chamber, the heater and the air driver. Quite commonly and obviously, these elements are placed one above the other along a vertical axis, with the air driver positioned at the lowest position, the electrical resistance above and the roasting chamber above the resistance. In addition, the apparatus usually comprises a smoke collector to collect the dust and smoke produced during roasting and treat them in a further step. This smoke collector is commonly connected to the top of the roasting chamber in a tightly manner.

Preferably, in these roasters, the hot air fluid bed chamber is fully removable from the apparatus in order to introduce and remove the beans and in order to clean the chamber and the roaster.

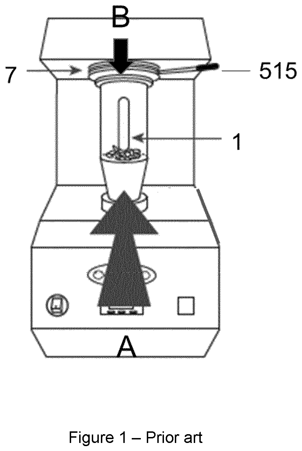

After these operations and when the chamber is set back inside the apparatus, it is important to tightly connect the bottom and the top of the chamber to the housing of the apparatus for efficient roasting and for obvious security reasons. Accordingly, the apparatus comprises a chamber locking device in order to tightly fix the chamber to the apparatus. This device usually simply consists in a chamber clamp mechanism working as illustrated in Figure 1. This clamp mechanism 7 comprises a vertically translatable tube with means to connect with the chamber top opening. When the chamber has to be introduced inside the housing, while holding the handle of the chamber, the operator slides the top flange of the chamber into top horizontal straight rails extending from the bottom of the translatable tube of the clamp mechanism and pushes the chamber back until it is stopped while ensuring that the bottom opening of the chamber fits with the corresponding bottom opening in the housing (as illustrated by arrow A). Then, further to the rotation of the lever 515, the tube is translated downwards to clamp the chamber in the apparatus and connect tightly the bottom and top openings to the apparatus (as illustrated by arrow B). This translation is the result of the rotation of the lever 515 moving down the translatable tube.

In order to enable an easy movement of the clamp mechanism, the clamp mechanism and precisely its screwing parts are greased. Yet, on account of the hot temperature of the roasting apparatus, grease smelts and drops which forces the operator to regularly repeat the greasing operation. In addition, dust deposit on the greased parts and cleaning of the clamp mechanism is required frequently. These greasing and cleaning operations are not very convenient because the access to the screwing parts of the clamp mechanism is narrow.

An object of the present invention is to provide a roasting apparatus with an improved locking assembly for the roasting chamber.

### Summary of the invention

In a first aspect of the invention, there is provided an apparatus for roasting coffee beans comprising :
- a housing,
- a roasting chamber, said chamber being removably mounted to the housing and presenting a bottom opening and a top opening,
- an air driver configured to drive air inside the roasting chamber through the bottom opening of said chamber,
- a heater configured to heat air driven inside the roasting chamber,
- a smoke and particles collector configured to collect smoke and particles from the top opening of the roasting chamber,
- a chamber locking assembly configured to fasten the top opening of the chamber to the housing and to connect said top opening to the smoke and particles collector in a removable manner,
wherein said chamber locking assembly comprises :
- a device for fixing the roasting chamber to the housing in a removable manner, said chamber fixing device and the top opening of the chamber forming a bayonet system and said chamber fixing device being removable from the housing, and
- a fixed support device configured for removably supporting the chamber fixing device in the housing.

The roasting apparatus comprises a roasting chamber presenting a bottom opening and a top opening. This roasting chamber is designed to enable the production of a fluidized bed of hot air when hot air is introduced through the bottom opening.

Usually, the central and upper part of the chamber is cylindrical.

Generally the bottom opening comprises a grid to hold the beans inside the chamber while enabling the passage of hot air therethrough.

The top opening enables the evacuation of smokes and particles generated during the roasting operation. This top opening also enables the introduction of beans to be roasted and the removal of roasted beans at the end of the roasting operation. For these last operations, the roasting chamber is removable from the housing of the apparatus.

The apparatus comprises an air driver configured to drive air inside the roasting chamber through the bottom opening of said chamber. Usually, this air driver is an air blower or a fan designed to blow air upwardly to the roasting chamber.

The apparatus comprises a heater positioned below the bottom opening of the chamber and configured to heat air before it is introduced inside the roasting chamber. Preferably, this heater is an electrical heater.

The air driver and the electrical heater are positioned inside the housing of the apparatus. The housing comprises a hot air outlet hole designed to enable the passage of hot air generated inside the housing to the bottom opening of the chamber.

As mentioned above, the roasting chamber is removably mounted to the housing. When the roasting chamber is mounted to the housing, the bottom opening of the roasting chamber cooperates with the hot air outlet hole of the housing.

Generally the heater is positioned just below the hot air outlet hole of the housing in order to limit loss of heat during the movement of hot air from the heater to the roasting chamber. This position of the heater provides a good temperature regulation during the roasting process in the roasting chamber too : actually any temperature change of the heater immediately impacts the temperature inside the roasting chamber.

The apparatus comprises a smoke and particles collector configured to collect smoke and particles produced during the roasting operation. Particles are usually coffee chaffs that can be separated from the smoke within a cyclone device downstream the collector. Smokes can be treated by a further smoke treating unit to remove any air contaminants.

In addition, the apparatus comprises a chamber locking assembly configured to fasten the top opening of the chamber to the housing and to connect said top opening to the smoke and particles collector in a removable manner.

This chamber locking assembly comprises at least two parts. A first part is a device for fixing the roasting chamber to the housing in a removable manner. The chamber can be removed from the housing for cleaning, filling and emptying coffee beans and then can be fixed to the housing for the roasting operation. This removable fixing characteristic is obtained by the chamber fixing device forming a bayonet system with the top opening of the chamber. Additionally, the chamber fixing device is removable from the housing and the chamber locking assembly comprises a fixed support device configured for removably supporting the chamber fixing device in the housing.

As a result, the chamber locking assembly is partly removable and all the parts become easily accessible. The chamber fixing device is totally removable from the housing and can be cleaned and greased outside the housing of the apparatus, for example on a work table. The fixed chamber support becomes fully accessible. This is convenient for the operator and the operation is carried out more efficiently than in apparatus of the prior art.

Preferably, the chamber fixing device presents a tubular body, said tubular body comprising an internal surface, the bottom part of the body presenting :
- a hollow-out at one first side of the bottom part, and
- a guiding rail designed in the internal surface of the bottom part at a second side of the bottom part, and
the top opening of the chamber comprises a flange configured to slide through the hollow-out in the guiding rail at the bottom of the chamber fixing device.

Preferably, the top part of the tubular body of the chamber fixing device comprises a first screwing thread configured to cooperate with a second screwing thread comprised in the fixed support device.

Accordingly, the tubular body of the chamber fixing device can be moved relatively to the fixed support device.

More precisely and preferably, the screwing threads are designed to enable the rotation of the chamber fixing device relatively to the support device between :
- one first end position where the chamber fixing device is attached to the fixed support device and the hollow-out at the bottom part of the body of the chamber fixing device is positioned at the front side of the apparatus,
- one second intermediate position where the chamber fixing device is attached to the chamber fixing device and the hollow-out at the bottom part of the body of the chamber fixing device is positioned aside the front side of the apparatus,
- one third end position where the chamber fixing device becomes detached from the fixed support device.

In the first end position, the position of the hollow-out of the chamber fixing device at the front side of the apparatus enables the operator to easily introduce the flange of the chamber top opening through this hollow-out inside the guiding rail and to push the chamber so that it slides and reaches the second side of the bottom part at the back.

From this first end position, the chamber fixing device can be rotated to the second intermediate position where the hollow-out is positioned aside the front side of the apparatus. Within this position, the chamber fixing device prevents the removal of the chamber from the apparatus (due to the bayonet effect).

Preferably, the screwing threads are designed so that, in this second intermediate position the top opening of the chamber is tightly connected to the dust and smoke collector. Usually, the screw threads are designed so that the chamber fixing device translate downwardly to the top of the chamber during the rotation from the first to the second position, and accordingly connects tightly the top opening to the dust and smoke collector.

From the second intermediate position, the chamber fixing device can be rotated to the third end position corresponding to the separation of both screwing threads and accordingly to the separation of the chamber fixing device from the support device. Then the operator is able to clean and maintain easily these two disassembled parts of the chamber locking assembly. The rotation from the first end position to the second intermediate position and then to the third end position is always done in the same direction.

Preferably, the chamber locking assembly comprises a removable stop member configured to delimit the stroke in rotation of the chamber fixing device between the first end position and the second intermediate position.

This stop member prevents the operator from rotating the chamber fixing device from the first position directly to the third position, in particular when the roasting chamber is positioned inside the housing. Actually, without this stop member, by inadvertence, the operator may rotate the chamber fixing device directly from the first position to the third position and detach this chamber fixing device while the chamber is present, which is not recommended.

The stop member enables delimiting the stroke in rotation between the first end position to the second intermediate position. This stop member is removable so that the operator can remove it deliberately and enables the rotation from the second to the third position if it is his/her choice only.

The removable stop member can a removable detent pin cooperating with a pin extending from the lateral external surface of the body of the chamber fixing device.

Preferably the chamber fixing device comprises a manoeuvring device, such as a lever, to actuate the rotation of said chamber fixing device. This device facilitates the movement of the operator.

Preferably, the chamber locking assembly comprises a gas tight sealing device to seal any gap between the chamber fixing device and the fixed support device and/or any gap between the chamber fixing device and the housing .

In the present application the terms "internal", "external", "back", "front", "bottom" and "lateral" are used to describe the relational positioning of features of the invention. These terms should be understood to refer to the apparatus in its normal operation or to the chamber when positioned in a beverage preparation dispenser for the production of a beverage as shown in the figures 2 and 3 and to the chamber locking assembly as illustrated in Figures 4A to 4C.

The above aspects of the invention may be combined in any suitable combination, as far as it is encompassed by the claims. Moreover, various features herein may be combined with one or more of the above aspects to provide combinations other than those specifically illustrated and described. Further objects and advantageous features of the invention will be apparent from the claims, from the detailed description, and annexed drawings.

### Brief description of the drawings

The characteristics and advantages of the invention will be better understood in relation to the following figures :
- Figure 1 is a schematic view of a roasting apparatus according to the state of the art and commented in above paragraph "Background of the invention",

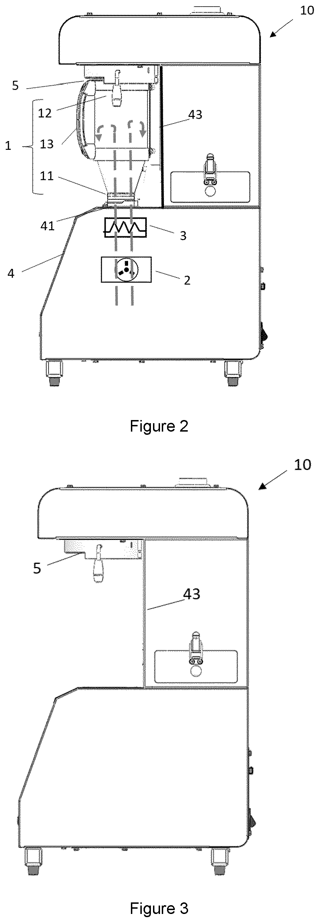

- Figure 2 illustrates a side view of a roasting apparatus according to the invention with the roasting chamber mounted to the apparatus,

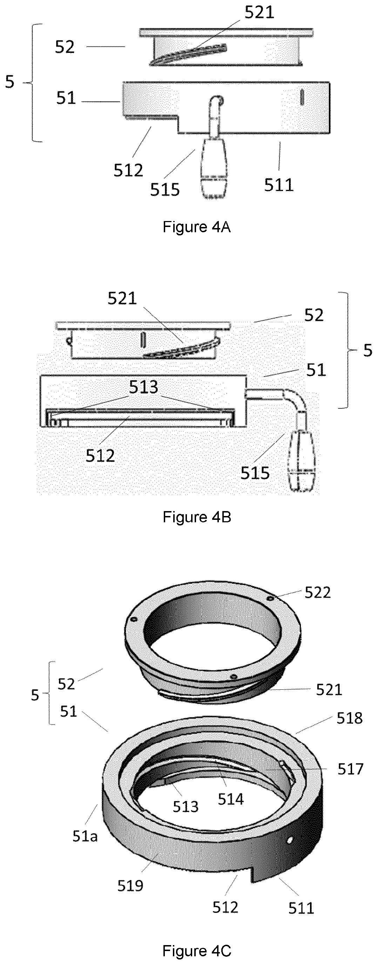

- Figures 4A and 4B are side, respectively front, views of the chamber locking assembly of the roasting apparatus of Figures 2 and 3 in disassembled state,
- Figure 4C is a perspective view of the chamber locking assembly of the roasting apparatus of Figures 2 and 3 in disassembled state,

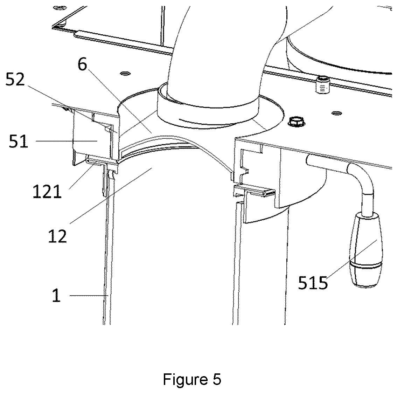

- Figure 5 is a vertical cross section of the top of the chamber connected to the chamber locking assembly.

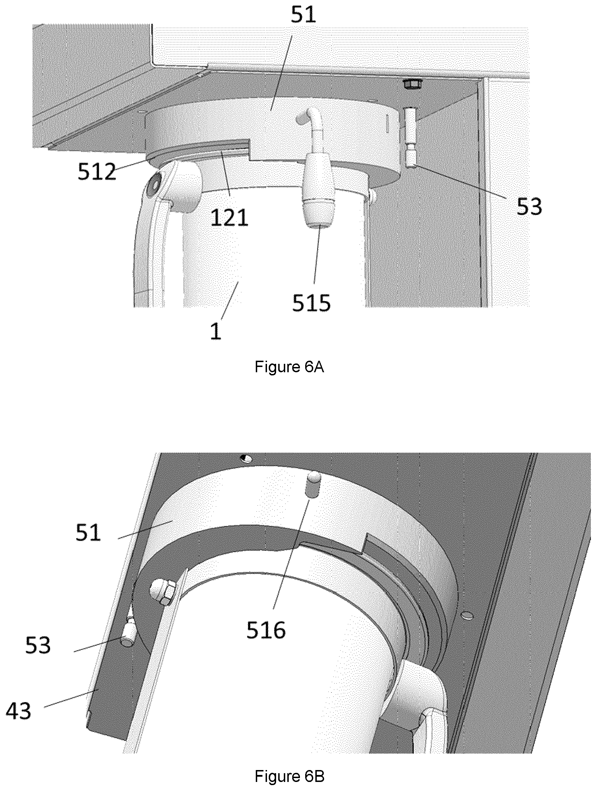

- Figure 6A is a side view of the chamber positioned in the chamber locking assembly and Figure 6B is a corresponding low angle view of the chamber.

### Detailed description of the drawings

**Figure 2** is a side view of a roasting apparatus 10 according to the invention. The apparatus comprises a housing 4 in which an air driver 2 and an air heater 3 are positioned. The air driver 2 is a fan driving air upwardly to the heater 3 and then to an air outlet hole 41 inside the chamber as illustrated by dotted lines.

The heater can heat the flow of air to a temperature comprised between 100 and 300°C.

The roasting apparatus comprises a roasting chamber 1 designed to hold coffee beans and to create a fluid bed of air from the hot air flow introduced through its opened bottom 11. The bottom opening 11 comprises a grid to retain coffee beans (not illustrated). When the chamber is mounted to the housing, the bottom of the chamber is tightly connected to the air outlet hole 41 to avoid hot air flow leaks. Usually, at least the top of the chamber presents a cylindrical shape, and preferably the top opening comprises a flange extending radially from the top edge.

The top opening 12 of the chamber is connected to a chamber locking assembly 5 in a removable manner. This assembly 5 fixes the top opening 12 of the chamber to the housing 4. This assembly connects also the top opening 12 to a smoke and particles collector (reference 6 in Figure 5).

The chamber 1 is removable from the housing 4 as illustrated in **Figure 3****.** The chamber can be put aside the roasting apparatus either for introduction or removal of coffee beans or for cleaning and maintenance. When the chamber is removed, the operator gets access to the chamber locking assembly 5 and can clean it if necessary as explained below.

**Figures 4A, 4B and 4C** are isolated views of the chamber locking assembly 5. This assembly comprises a device 51 for fixing the roasting chamber to the housing in a removable manner and a fixed support device 52 for removably supporting the chamber fixing device 51 in the housing.

The chamber fixing device 51 is a tubular body presenting an internal surface 517 and an external surface 519. At the top 518 of this tubular body of the chamber fixing device, the internal surface 517 comprises a first screwing thread 514 as illustrated in Figure 4C.

The fixed support device 52 is a tubular body defining a central hole for the passage of smokes and particles generated in the chamber.

This first screwing thread 514 of the chamber fixing device is configured to cooperate with a second screwing thread 521 present at the external surface of the fixed support device 52.

This fixed support device 52 is firmly attached to the housing of the roasting apparatus for example with screws inside the fixing holes 522 illustrated in Figure 4C. On the contrary, the chamber fixing device 51 can be either fixed and screwed to the fixed support device 52 or alternatively dismantled from fixed support device 52 when it is necessary to grease and clean the screwing threads. The access to each these devices is easy for the operator.

Preferably the chamber fixing device 51 is configured to form a bayonet system with the top opening 12 of the chamber, in particular with the flange 121 at the top of the chamber (see Figure 5).

As illustrated in Figures 4A to 4C, the chamber fixing device 51 presents a hollow-out 512 at one first side of its bottom part 511 and a guiding rail 513 designed in the internal surface 517 of the bottom part 511 at a second side opposed to the first side of the bottom part. This guiding rail follows the tubular shape of the body of the chamber fixing device and extends in between both edges of the hollow-out.

When the chamber fixing device 51 is positioned with the hollow out 512 at the front side of the apparatus, this hollow out 512 enables the introduction of the top of the chamber inside the chamber fixing device 51 and in particular in the guiding rail 513 designed to receive the flange 121 of the top of the chamber as illustrated in **Figure 5**. As a result the chamber 1 can be introduced inside the apparatus by the chamber fixing device 51 when the chamber fixing device 51 is itself fixed to the fixed support device 52.

The screwing threads 514, 521 are preferably designed to enable the rotation of the chamber fixing device 51 relatively to the fixed support device 52 between the following positions :
- one first end position where the chamber fixing device 52 is attached to the chamber fixing device 51 and the hollow-out 512 at the bottom part of the body of the chamber fixing device is positioned at the front side of the apparatus. This is the position where the chamber can be introduced inside the chamber fixing device 51 or removed therefrom.
- one second intermediate position where the chamber fixing device 51 is attached to the chamber fixing device 52 and the hollow-out 512 at the bottom part of the body of the chamber fixing device is positioned aside the front side of the apparatus. The chamber is firmly attached to the roaster, for example during the roasting operation, and the top of the chamber is in tight connection with the smoke and particles collector 6.
- one third end position where the chamber fixing device 51 becomes detached from the fixed support device 52 as explained above and illustrated in Figures 4A to 4C.

**Figure 6A** shows the top of the chamber 1 positioned in the chamber locking assembly : the flange 121 of the top opening of the chamber has been introduced through the hollow-out 512 positioned at the front side and the flange 121 is supported by the guiding rail of the chamber fixing device 51. The chamber is not yet locked inside the chamber locking device 51, it can be removed therefrom if desired, or it can be locked by rotating the lever 515 to the left and accordingly displacing the hollow out 121 from the front side of the apparatus. During this rotation to the left, the guiding rail inside the tubular body of the chamber fixing device rotates along the flange 121 of the top opening of the chamber preventing the removal of the chamber and simultaneously slightly descends pushing down the chamber so that the bottom of the chamber is tightly connected to the heater and the air driver. Simultaneously the top opening of the chamber is tightly connected to the smoke and dust collector.

This side view illustrates the presence of a removable pin 53 extending from the housing 43 and positioned to cooperate with a corresponding pin 516 extending from the external surface of the body of the chamber fixing device 51 as illustrated in Figure 6B. The removable pin 53 is positioned so that the corresponding pin 516 abuts against the removable pin 53 when the chamber fixing device reaches the second intermediate position where the hollow-out 512 positioned aside the front side of the apparatus, meaning that the chamber is locked inside the chamber locking assembly 5.

This pin 53 is removable by the operator if he/she wants to dismantle the chamber locking assembly for cleaning or maintenance operation. In that situation, the chamber is removed from the apparatus and put aside, the pin 53 is removed and the operator is able to rotate the chamber locking device 51 with the lever 515 until said chamber locking device 51 detaches from the fixed support device.

In an alternative embodiment, the presence of the removable pin member can be avoided by designing the screw threads of the chamber fixing assembly with a sufficient length so that the rotation of the chamber fixing device from the second to the third position (to separate the chamber fixing assembly from the fixed support device) is longer than the rotation from the first to the second position (to lock the chamber in the apparatus).

Preferably, the chamber locking assembly 5 comprises a seal to prevent any smoke from escaping therefrom during the roasting operation.

This seal can be positioned at the top part 518 of the chamber fixing device 51 either on the upper surface 518a configured to contact the lower surface of the housing 4 or on the upper surface 518b configured to contact the lower surface of the fixed support device 52 as illustrated in Figure 5. A common flat plate o-ring seal or even a lip seal can be used.

The present apparatus presents the advantage of comprising a chamber locking assembly that enables the fixing of the chamber and the dismantling of the assembly itself by means of the same rotating movement, simply differentiating the two operations by the angle of rotation. As a result the assembly is simple, compact and easy to operate.

Although the invention has been described with reference to the above illustrated embodiments, it will be appreciated that the invention as claimed is not limited in any way by these illustrated embodiments.

As used in this specification, the words "comprises", "comprising", and similar words, are not to be interpreted in an exclusive or exhaustive sense. In other words, they are intended to mean "including, but not limited to".

**List of references in the drawings :**

| | |
|---|---|
| roasting apparatus | 10 |
| roasting chamber | 1 |
| bottom opening | 11 |
| top opening | 12 |
| flange | 121 |
| handle | 13 |
| air driver | 2 |
| heater | 3 |
| housing | 4 |
| air outlet hole | 41 |
| vertical housing part | 43 |
| chamber locking assembly | 5 |
| chamber fixing device | 51 |
| bottom part | 511 |
| hollow-out | 512 |
| guiding rail | 513 |
| first screwing thread | 514 |
| manoeuvring device | 515 |
| pin | 516 |
| internal surface | 517 |
| top part | 518 |
| upper surface | 518a, 518b |
| external surface | 519 |
| fixed support device | 52 |
| second screwing thread | 521 |
| hole | 522 |
| stop member | 53 |
| smoke and particles collector | 6 |
| clamp mechanism | 7 |

## Claims

1. Apparatus (10) for roasting coffee beans comprising :
- a housing (4),
- a roasting chamber (1), said chamber being removably mounted to the housing (4) and presenting a bottom opening (11) and a top opening (12),
- an air driver (2) configured to drive air inside the roasting chamber through the bottom opening of said chamber,
- a heater (3) configured to heat air driven inside the roasting chamber,
- a smoke and particles collector (6) configured to collect smoke and particles from the top opening (12) of the roasting chamber,
- a chamber locking assembly (5) configured to fasten the top opening (12) of the chamber to the housing (4) and to connect said top opening to the smoke and particles collector (6) in a removable manner,
**characterised in that** said chamber locking assembly (5) comprises :
- a device (51) for fixing the roasting chamber to the housing in a removable manner, said chamber fixing device and the top opening of the chamber forming a bayonet system and said chamber fixing device being removable from the housing, and
- a fixed support device (52) configured for removably supporting the chamber fixing device (51) in the housing.

2. Apparatus according to Claim 1, wherein the chamber fixing device (51) presents a tubular body said tubular body comprising an internal surface (517), the bottom part (511) of the body presenting :
- a hollow-out (512) at one first side of the bottom part, and
- a guiding rail (513) designed in the internal surface (517) of the bottom part at a second side of the bottom part, and
the top opening (12) of the chamber comprises a flange (121) configured to slide through the hollow-out (512) in the guiding rail (513) at the bottom of the chamber fixing device.

3. Apparatus according to Claim 1 or 2, wherein the top part (518) of the tubular body of the chamber fixing device comprises a first screwing thread (514) configured to cooperate with a second screwing thread (521) comprised in the fixed support device (52).

4. Apparatus according to claims 2 and 3, wherein the screwing threads (514, 521) are designed to enable the rotation of the chamber fixing device (51) relatively to the fixed support device (52) between :
- one first end position where the chamber fixing device (51) is attached to the fixed support device (52) and the hollow-out (512) at the bottom part of the body of the chamber fixing device is positioned at the front side of the apparatus,
- one second intermediate position where the chamber fixing device (51) is attached to the fixed support device (52) and the hollow-out (512) at the bottom part of the body of the chamber fixing device is positioned aside the front side of the apparatus,
- one third end position where the chamber fixing device (51) becomes detached from the fixed support device (52).

5. Apparatus according to the precedent claim, wherein the screwing threads (514, 521) are designed so that, in the second intermediate position the top opening (12) of the chamber is tightly connected to the dust and smoke collector (6).

6. Apparatus according to Claim 4 or 5, wherein the chamber locking assembly (5) comprises a removable stop member (53) configured to delimit the stroke in rotation of the chamber fixing device (51) between the first end position and the second intermediate position.

7. Apparatus according to the precedent claim, wherein the removable stop member (53) is a removable detent pin cooperating with a pin (516) extending from the external surface of the body of the chamber fixing device.

8. Apparatus according to any one of the precedent claims, wherein the chamber fixing device (51) comprises a manoeuvring device (515) to actuate the rotation of said chamber fixing device.

9. Apparatus according to any one of the precedent claims, wherein the chamber locking assembly (5) comprises a gas tight sealing device to seal any gap between the chamber fixing device (51) and the fixed support device (52) and/or any gap between the chamber fixing device (51) and the housing (4).

## Patentansprüche

1. Vorrichtung (10) zum Rösten von Kaffeebohnen, umfassend:
- ein Gehäuse (4),
- eine Röstkammer (1), wobei die Kammer abnehmbar an dem Gehäuse (4) montiert ist und eine untere Öffnung (11) und eine obere Öffnung (12) aufweist,
- einen Lufttreiber (2), der dazu konfiguriert ist, Luft innerhalb der Röstkammer durch die untere Öffnung der Kammer zu treiben,
- ein Heizelement (3), das dazu konfiguriert ist, innerhalb der Röstkammer getriebene Luft zu erwärmen,
- einen Rauch- und Partikelsammler (6), der dazu konfiguriert ist, Rauch und Partikel von der oberen Öffnung (12) der Röstkammer zu sammeln,
- eine Kammerverriegelungsanordnung (5), die dazu konfiguriert ist, die obere Öffnung (12) der Kammer an dem Gehäuse (4) zu befestigen und die obere Öffnung abnehmbar mit dem Rauch- und Partikelsammler (6) zu verbinden, **dadurch gekennzeichnet, dass** die Kammerverriegelungsanordnung (5) umfasst:
- eine Vorrichtung (51) zum abnehmbaren Befestigen der Röstkammer an dem Gehäuse, wobei die Kammerbefestigungseinrichtung und die obere Öffnung der Kammer ein Bajonett-System bilden und die Kammerbefestigungseinrichtung von dem Gehäuse abnehmbar ist, und
- eine befestigte Stützeinrichtung (52), die dazu konfiguriert ist, die Kammerbefestigungseinrichtung (51) abnehmbar in dem Gehäuse zu stützen.

2. Vorrichtung nach Anspruch 1, wobei die Kammerbefestigungseinrichtung (51) einen röhrenförmigen Körper aufweist, wobei der röhrenförmige Körper eine innere Oberfläche (517) umfasst, wobei der untere Teil (511) des Körpers aufweist:
- einen Hohlraum (512) an einer ersten Seite des unteren Teils, und
- eine Führungsschiene (513), die in der inneren Oberfläche (517) des unteren Teils an einer zweiten Seite des unteren Teils ausgestaltet ist, und
die obere Öffnung (12) der Kammer einen Flansch (121) umfasst, der dazu konfiguriert ist, durch den Hohlraum (512) in der Führungsschiene (513) am Boden der Kammerbefestigungseinrichtung zu gleiten.

3. Vorrichtung nach Anspruch 1 oder 2, wobei der obere Teil (518) des röhrenförmigen Körpers der Kammerbefestigungseinrichtung ein erstes Schraubgewinde (514) umfasst, das dazu konfiguriert ist, mit einem zweiten Schraubgewinde (521) zusammenzuwirken, das in der befestigten Stützeinrichtung (52) enthalten ist.

4. Vorrichtung nach den Ansprüchen 2 und 3, wobei die Schraubgewinde (514, 521) dazu ausgestaltet sind, die Drehung der Kammerbefestigungseinrichtung (51) relativ zu der befestigten Stützeinrichtung (52) zu ermöglichen zwischen:
- einer ersten Endposition, in der die Kammerbefestigungseinrichtung (51) an der befestigten Stützeinrichtung (52) angebracht ist und der Hohlraum (512) am unteren Teil des Körpers der Kammerbefestigungseinrichtung an der Vorderseite der Vorrichtung positioniert ist,
- eine zweite Zwischenposition, in der die Kammerbefestigungseinrichtung (51) an der befestigten Stützeinrichtung (52) angebracht ist und der Hohlraum (512) am unteren Teil des Körpers der Kammerbefestigungseinrichtung neben der Vorderseite der Vorrichtung positioniert ist,
- eine dritte Endposition, in der die Kammerbefestigungseinrichtung (51) von der befestigten Stützeinrichtung (52) gelöst wird.

5. Vorrichtung nach dem vorstehenden Anspruch, wobei die Schraubgewinde (514, 521) so ausgestaltet sind, dass in der zweiten Zwischenposition die obere Öffnung (12) der Kammer fest mit dem Staub- und Rauchsammler (6) verbunden ist.

6. Vorrichtung nach Anspruch 4 oder 5, wobei die Kammerverriegelungsanordnung (5) ein entfernbares Stoppelement (53) umfasst, das dazu konfiguriert ist, den Hub bei der Drehung der Kammerbefestigungseinrichtung (51) zwischen der ersten Endposition und der zweiten Zwischenposition zu begrenzen.

7. Vorrichtung nach dem vorstehenden Anspruch, wobei das abnehmbare Stoppelement (53) ein abnehmbarer Raststift ist, der mit einem Stift (516) zusammenwirkt, der sich von der äußeren Oberfläche des Körpers der Kammerbefestigungseinrichtung erstreckt.

8. Vorrichtung nach einem der vorstehenden Ansprüche, wobei die Kammerbefestigungseinrichtung (51) eine Manövriereinrichtung (515) umfasst, um die Drehung der Kammerbefestigungseinrichtung zu bedienen.

9. Vorrichtung nach einem der vorstehenden Ansprüche, wobei die Kammerverriegelungsanordnung (5) eine gasdichte Dichtungseinrichtung umfasst, um jeden Spalt zwischen der Kammerbefestigungseinrichtung (51) und der befestigten Stützeinrichtung (52) und/oder jeden Spalt zwischen der Kammerbefestigungseinrichtung (51) und dem Gehäuse (4) abzudichten.

## Revendications

1. Appareil (10) pour torréfier des grains de café comprenant :
- un logement (4),
- une chambre de torréfaction (1), ladite chambre étant montée de manière amovible au logement (4) et présentant une ouverture inférieure (11) et une ouverture supérieure (12),
- un dispositif d'entraînement d'air (2) configuré pour entraîner de l'air à l'intérieur de la chambre de torréfaction par l'intermédiaire de l'ouverture inférieure de ladite chambre,
- un dispositif de chauffage (3) configuré pour chauffer l'air entraîné à l'intérieur de la chambre de torréfaction,
- un collecteur de fumée et de particules (6) configuré pour collecter de la fumée et des particules provenant de l'ouverture supérieure (12) de la chambre de torréfaction,
- un ensemble de verrouillage de chambre (5) configuré pour fixer l'ouverture supérieure (12) de la chambre au logement (4) et pour connecter ladite ouverture supérieure au collecteur de fumée et de particules (6) de manière amovible, **caractérisé en ce que** ledit ensemble de verrouillage de chambre (5) comprend :
- un dispositif (51) pour fixer la chambre de torréfaction au logement de manière amovible, ledit dispositif de fixation de chambre et l'ouverture supérieure de la chambre formant un système à baïonnette et ledit dispositif de fixation de chambre pouvant être retiré du logement, et
- un dispositif de support fixe (52) configuré pour supporter de manière amovible le dispositif de fixation de chambre (51) dans le logement.

2. Appareil selon la revendication 1, dans lequel le dispositif de fixation de chambre (51) présente un corps tubulaire ledit corps tubulaire comprenant une surface interne (517), la partie inférieure (511) du corps présentant :
- un évidement (512) au niveau d'un premier côté de la partie inférieure, et
- un rail de guidage (513) conçu dans la surface interne (517) de la partie inférieure au niveau d'un deuxième côté de la partie inférieure, et
l'ouverture supérieure (12) de la chambre comprend une bride (121) configurée pour coulisser à travers l'évidement (512) dans le rail de guidage (513) au niveau du fond du dispositif de fixation de chambre.

3. Appareil selon la revendication 1 ou 2, dans lequel la partie supérieure (518) du corps tubulaire du dispositif de fixation de chambre comprend un premier filetage de vis (514) configuré pour coopérer avec un deuxième filetage de vis (521) compris dans le dispositif de support fixe (52).

4. Appareil selon les revendications 2 et 3, dans lequel les filetages de vis (514, 521) sont conçus pour permettre la rotation du dispositif de fixation de chambre (51) par rapport au dispositif de support fixe (52) entre :
- une première position finale où le dispositif de fixation de chambre (51) est attaché au dispositif de support fixe (52) et l'évidement (512) au niveau de la partie inférieure du corps du dispositif de fixation de chambre est positionné au niveau du côté avant de l'appareil,
- une deuxième position intermédiaire où le dispositif de fixation de chambre (51) est attaché au dispositif de support fixe (52) et l'évidement (512) au niveau de la partie inférieure du corps du dispositif de fixation de chambre est positionné à côté du côté avant de l'appareil,
- une troisième position finale où le dispositif de fixation de chambre (51) se détache du dispositif de support fixe (52).

5. Appareil selon la revendication précédente, dans lequel les filetages de vis (514, 521) sont conçus de sorte que, dans la deuxième position intermédiaire l'ouverture supérieure (12) de la chambre est fermement connectée au collecteur de poussières et de fumée (6).

6. Appareil selon la revendication 4 ou 5, dans lequel l'ensemble de verrouillage de chambre (5) comprend un élément d'arrêt amovible (53) configuré pour délimiter la course en rotation du dispositif de fixation de chambre (51) entre la première position finale et la deuxième position intermédiaire.

7. Appareil selon la revendication précédente, dans lequel l'élément d'arrêt amovible (53) est une goupille à déclic amovible coopérant avec une goupille (516) s'étendant à partir de la surface externe du corps du dispositif de fixation de chambre.

8. Appareil selon l'une quelconque des revendications précédentes, dans lequel le dispositif de fixation de chambre (51) comprend un dispositif de manoeuvre (515) pour actionner la rotation dudit dispositif de fixation de chambre.

9. Appareil selon l'une quelconque des revendications précédentes, dans lequel l'ensemble de verrouillage de chambre (5) comprend un dispositif de scellement étanche aux gaz pour sceller un écart éventuel entre le dispositif de fixation de chambre (51) et le dispositif de support fixe (52) et/ou un écart éventuel entre le dispositif de fixation de chambre (51) et le logement (4).
